# EUROPEAN PATENT APPLICATION

(11) **EP 1 862 891 A2**
(43) Date of publication of application: **05.12.2007**
(21) Application number: 07107604.6
(22) Date of filing: 07.05.2007
(51) Int. Cl.: G06F 3/048

(54) **Mode selection mechanism and method for mobile terminal using virtual mode selection dial**

(30) Priority: 29.05.2006 KR 20060047923
(71) Applicant: Samsung Electronics Co., Ltd., Suwon-si Gyeonggi-do (KR)
(72) Inventor: Kim, Kwon Tae, Gyeonggi-do (KR); Kim, Bong Kyun, Gyeonggi-do (KR); Kim, Hwan, Gyeonggi-do (KR)
(74) Representative: Zimmer, Franz-Josef

(57) **Abstract**

A mode selection mechanism and method for a mobile terminal using a virtual mode selection dial presented on a display screen are provided. A mobile terminal having a virtual mode selection dial presented on a display includes a virtual mode selection unit for selecting one of operation modes provided by the mobile terminal and a controller for controlling functions of the operation mode selected by the virtual mode selection unit. A mode selection method for a mobile terminal includes displaying a virtual mode selection dial on a display; selecting an operation mode using the virtual mode selection dial; entering the selected operation mode; and executing a specific function associated with the operation mode in response to a user command.

## Description

### BACKGROUND OF THE INVENTION

### Field of the Invention

The present invention relates to a mobile terminal and, in particular, to a mode selection mechanism and method of using a virtual mode selection dial presented on a display screen.

### Description of the Related Art

Typically, mobile terminals are equipped with a mode selection mechanism implemented with a key, button, or dial. The dial is a rotating disk such that the mode selection is performed by rotating the dial. The mode selection dial generally cooperates with a display unit, such that an icon representing the selected mode is highlighted on the display, thus resulting in the recognition of the selected mode.

In the case of the conventional mode selection, it is difficult to recognize the selected mode or function especially when the operation modes and functions are provided in the form of a list. In addition, a complex key manipulation is required for selecting an operation mode. Moreover, the conventional hardware mode selection dial is vulnerable to physical impacts and makes the structure of the mobile terminal to be complex which in turn hinders from realizing a slim and lightweight design of the mobile terminal.

Furthermore, the conventional hardware mode selection dial is disadvantageous in that the dial may hide the mode or function list while rotating, thereby causing an inconvenience to the user.

### SUMMARY OF THE INVENTION

The present invention has been made in an effort to solve the above problems and provides additional advantages, by providing a mode selection mechanism and method of using a virtual mode selection dial graphically presented on a display.

It is another aspect of the present invention to provide a mode selection mechanism and method of using a virtual mode selection dial that are capable of simplifying a hardware structure of the mobile phone and a mode selection complexity.

In accordance with an aspect of the present invention, a mobile terminal having a virtual mode selection dial presented on a display includes a virtual mode selection unit for selecting one of operation modes provided by the mobile terminal, wherein the virtual mode selection unit is displayed in the form of a virtual model selection dial on the display; and a controller for controlling functions of the operation mode selected by the virtual mode selection unit; wherein the display is a light emission display and displays an operation status of the selected operation mode under the control of the controller.

Preferably, the mobile terminal further includes a storage unit for storing display information associated with the operation mode selected by the operation mode selection unit; and a keypad or at least one graphical button presented on the display along with the virtual mode selection dial for inputting commands for executing a specific function of the selected operation mode.

Preferably, the virtual mode selection dial has a shape of a disc rotating 360°by touching the touch screen.

Preferably, the operation modes include a camera mode, a camcorder mode, a night scene mode, a name card mode, a folder mode, and a setting mode.

Preferably, a telephone mode, a wireless internet mode, a remote control mode, a game mode, and a calculator mode may be further included.

In accordance with another embodiment of the present invention, a mode selection method for a mobile terminal includes displaying a virtual mode selection dial on a display; selecting an operation mode using the virtual mode selection dial; entering the selected operation mode; and executing a specific function associated with the operation mode in response to a user command, wherein the display is a liquid crystal display and displays an operation status of the selected operation mode.

Preferably, the user command is input through a specific key provided on a keypad or a specific icon presented on the display.

### BRIEF DESCRIPTION OF THE DRAWINGS

The above features and advantages of the present invention will be more apparent from the following detailed description in conjunction with the accompanying drawings, in which:
FIG. 1 is a block diagram illustrating the configuration of a mobile terminal equipped with a virtual mode selection mechanism according to an embodiment of the present invention;
FIG. 2 is a schematic plan view illustrating a mobile terminal according to an embodiment of the present invention;
FIG. 3 is a screen image illustrating a virtual mode selection dial displayed on a screen of the display unit of the mobile terminal of FIG. 1;
FIG. 4 is a flowchart illustrating a mode selection method using a virtual mode selection dial according to an embodiment of the present invention; and
FIG. 5 is an exemplary view illustrating a virtual mode selection dial display process of FIG. 4.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

### <First Embodiment>

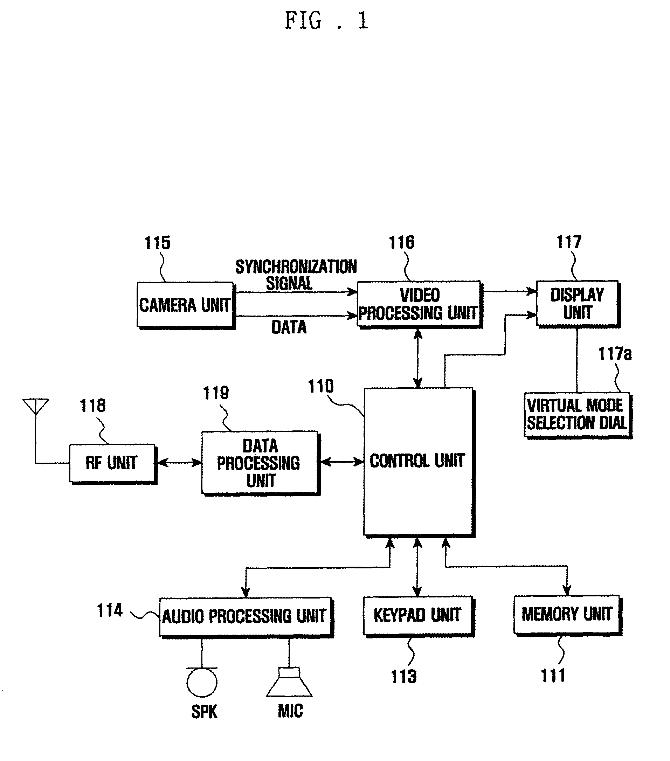

FIG. 1 is a block diagram illustrating the configuration of a mobile terminal equipped with a virtual mode selection mechanism according to an embodiment of the present invention. Note that the mobile terminal is a cellular communication device and supports a camera function.

Referring to FIG. 1, the mobile terminal includes a control unit 110, a memory unit 111, a keypad unit 113, an audio processing unit 114, a camera unit 115, a video processing unit 116, a display unit 117, a Radio Frequency (RF) unit 118, a data processing unit 119, and a mode selection unit 117a.

The RF unit 118 is implemented to process radio signals exchanging between a mobile terminal and a base station (not shown). The RF unit 118 includes an RF transmitter for up-converting and amplifying a base band signal to be transmitted, and an RF receiver for low noise amplifying and down-converting the received radio frequency signal.

The data processing unit 119 is provided with a transmitter for performing encoding and modulation of signals for transmission and a receiver for performing demodulation and decoding on the received signal. That is, the data processing unit 119 can be implemented with a modem and a codec. The codec is provided with a data codec for processing packet data, and audio codec for processing audio signals including voice.

The control unit 110 controls the overall operations of the mobile terminal. In alternate embodiment, the control unit 110 can be integrated with the data processing unit 119. The control unit 110 also controls cooperative signaling among the memory unit 111, audio processing unit 114, video processing unit 116, display unit 117, and data processing unit 119.

In this embodiment, particularly, the control unit 110 controls the units of the mobile terminal to cooperatively operate when an operation mode is selected using the virtual mode selection dial.

The memory unit 111 stores the user and application data and temporary files generated while operating various applications.

The audio processing unit 114 processes the audio data output from the audio codec of the data processing unit 119 so as to be output as an audible sound wave through a speaker (SPK), and processes the analog audio signal input through a microphone (MIC) so as to output as audio data to the audio codec of the data processing unit 119.

The camera unit 115 includes a camera sensor for converting a visible scene formed by the lens into an electrical signal and a signal processing unit for converting the electrical signal into a digital signal. Preferably, the camera sensor is a charge coupled device (CCD) and the signal processing unit is a Digital Signal Processor (DSP). Note that the camera sensor and the signal processing unit can be provided integrally or separately.

The video processing unit 116 processes the digital signal output from the camera unit 115 and generates video data. The video processing unit 116 processes the digital signal output from the camera module 115 by frame to fit for a screen resolution of the display unit 117. The video processing unit 116 is provided with a video codec for compressing the video data and decompressing the compressed video data. The video codec includes a Joint Photographic Experts Group (JPEG) codec, a Moving Picture Experts Group (MPEG)-4 codec, and Wavelet codec. The video processing unit 116 can support an On-Screen Display (OSD) function for displaying system information on the screen picture under the control of the control unit 110.

The display unit 117 presents the video data output from the video processing unit 116 and system information output from the control unit 110. The display unit 117 can be implemented with a liquid crystal display (LCD) or an Organic Electroluminescent Diode (OLED). In this case, the display unit 117 can be provided with a display controller, a graphic memory for storing the video data, and a light emission device. The display unit 117 can be implemented with a touch screen function.

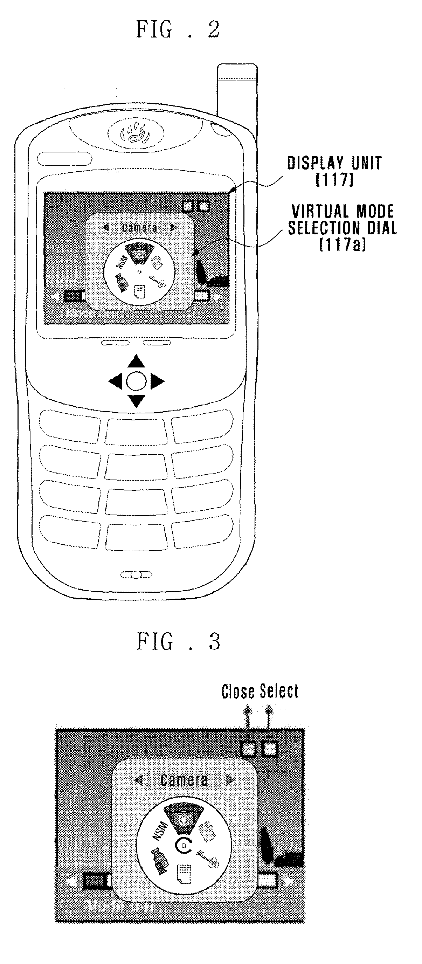

According to the teachings of the present invention, the mode selection unit 117a is virtually presented on a screen of the display unit 117 as a virtual mode selection dial, as shown in FIG. 2. For simplifying the explanation, the mode selection unit and the virtual mode selection dial are interchangeably used with the same reference numeral 117a.

FIG. 3 is a screen image illustrating the virtual mode selection dial displayed on a screen of the display unit of the mobile terminal of FIG. 1. As shown in FIG. 3, the virtual mode selection dial is provided with several operation mode icons circularly arranged on the dial such that an icon positioned at the 12'oclock direction is highlighted. The virtual mode selection dial screen provides a select button and a close button. The mode selection is performed by 1) touching the select button on the screen, and/or 2) pressing a mode selection key provided on the keypad unit. For example, the mode selection key can be a • key positioned between □ and □ keys.

The keypad unit 113 is provided with a plurality of alphanumeric keys for inputting characters and numbers and various function keys for executing corresponding functions.

In this embodiment, particularly, the keypad is provided with a shortcut key for rotating the virtual mode selection dial 117a. For example, # or * key can be designated as a rotation key for rotating the virtual mode selection dial 117a.

### <Second Embodiment >

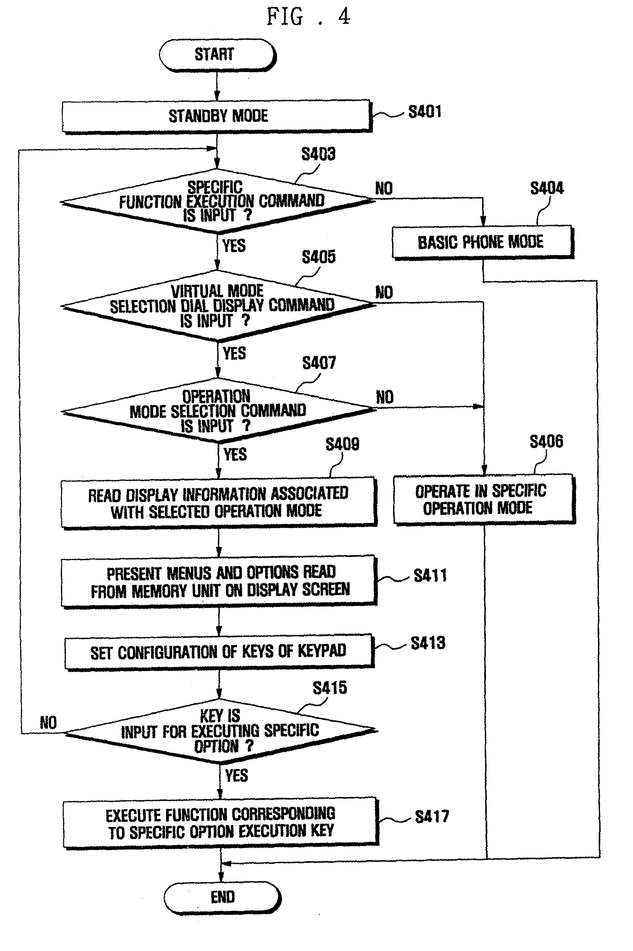

FIG. 4 is a flowchart illustrating a mode selection method using a virtual mode selection dial according to an embodiment of the present invention.

Referring to FIG. 4, the mobile terminal is turned on to enter a standby mode (S401). During the standby mode, the mobile terminal determines whether a specific function execution command is input (S403). In this embodiment, the specific function execution command is generated by a camera activation key for activating the camera unit 115. If the camera activation key is not input, the mobile terminal operates in a basic phone mode for cellular communication (S404).

If the specific function execution command is input, the mobile terminal determines whether a virtual mode selection dial display command is input (S405). If a virtual mode selection dial display command is not input, the mobile terminal operates in the specific operation mode (S406). In this embodiment, the specific operation mode is a camera preview mode for taking a still image.

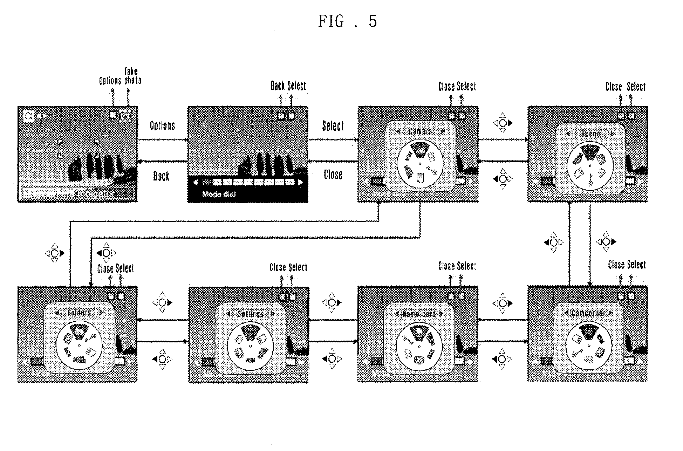

FIG. 5 is an exemplary view illustrating a virtual mode selection dial display process of FIG. 4. Referring to FIG. 5, in the camera preview mode, an "options" button is presented at a top right side of the preview mode screen such that the mobile terminal prepares to display the virtual mode selection dial with a preparation screen if the "options" button is selected. The preparation screen provides a "selection button." If the "selection button" is touched, the virtual mode selection dial is presented on the screen. The virtual mode selection dial is provided with a plurality of icons representing the operation modes.

Accordingly, there is no need to alternately watch the display and the hardware dial to check the operation state as in the conventional hardware dial-based mode selection mechanism.

Returning to FIG. 4, if a virtual mode selection dial display command is input, the mobile terminal displays the virtual mode selection dial and determines whether an operation mode selection command is input through the virtual mode selection (S407).

If a specific operation mode selection command is input while a specific operation mode icon (for example, a camcorder icon) is highlighted, the mobile terminal activates a corresponding function. The specific operation mode icon is selected by rotating the virtual mode selection dial in the clockwise or counter-clockwise direction by pressing the direction keys (□ key for the clockwise direction and 0 for the counter-clockwise direction) or by touching the direction icon displayed on the touch screen, and then pressing • key positioned between □ and □ keys or touching the selection button presented at the top right side of the screen when an intended operation mode icon is highlighted at the 12'oclock direction of the virtual mode selection dial.

The display screen also provides a "close" button beside the "select" button such that the virtual mode selection dial disappear if the "close" button is touched.

The operation modes of the mobile terminal are presented with corresponding icons and include a camera mode, a camcorder mode, a night scene mode (SCM), a name card mode, a folder mode, and a setting mode.

Preferably, a telephone mode, a wireless internet mode, a remote control mode, a game mode, and a calculator mode are further included.

In the folder mode, the mobile terminal can read files (for example, a still pictures and motion pictures) stored in the memory unit 111 to display on the screen of the display unit 117. The mobile terminal can adjust the volume when a specific operation mode (for example, a camcorder mode) is selected for recoding sound at a regular level.

As described above, the available operation modes are informed to a user through the virtual mode selection dial in the initial menu screen of the mobile terminal.

After a specific operation mode is selected, the operation mode-related functions can be executed a keypad manipulation.

In this embodiment, a zoom-in/out function is executed using volume up/down keys in the camera mode.

If an operation mode selection command is input at step S407, the mobile terminal reads the display information associated with the selected operation mode from the memory unit 111 (S409). For example, in the phone mode, the mobile terminal reads menus and options related to the phone mode from the memory.

Next, the mobile terminal presents the menus and options read from the memory unit on the display screen (S411). Accordingly, the user recognizes the functions provided in the selected operation mode and operates the intended functions with reference to the menus and options.

While presenting the menus and options, the mobile terminal sets a configuration of the keys of the keypad 113 (S413) such that the keys generate commands associated with the selected operation mode.

For example, the □ and □ keys can be set for volume controls when the phone mode is selected or for TV channel navigation keys when the remote control mode is selected.

In this embodiment, the virtual mode selection dial is displayed along with □ and □ buttons that are mapped to the counter-clockwise rotation and the clockwise rotation, respectively.

After setting a configuration of the keys, the mobile terminal determines whether a specific key is input for executing a specific option (S415). If there is no key input, the mobile terminal returns to step S403 and repeats the above steps.

If a specific option execution key is input, the mobile terminal executes a function corresponding to the specific option execution key (S417).

In this embodiment as shown in FIG. 5, when the camera mode is activated, the virtual mode selection dial is provided with □ and □ buttons for rotating the virtual mode selection dial in a counter-clockwise direction and a clockwise direction for navigating other operation mode, respectively.

As described above, the mode selection mechanism and method for a mobile terminal according to the present invention are implemented with a virtual mode selection dial presented on a display screen so as to intuitively recognize and select operation modes and functions with operation mode icons arranged on the virtual mode selection dial.

Also, since the mode selection mechanism and method of the present invention are implemented with a graphical mode selection dial presented on a display screen, it is possible to simplify a hardware configuration of the mobile terminal and to simplify the mode selection operation.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A mobile terminal having a display, comprising:
a virtual mode selection unit for selecting one of operation modes provided by the mobile terminal, the virtual mode selection unit being displayed in the form of a virtual model selection dial on the display; and
a controller for controlling functions of the operation mode selected by the virtual mode selection unit,
wherein the display displays an operation status of the selected operation mode under the control of the controller

2. The mobile terminal of claim 1, further comprises:
a storage for storing display information associated with the operation mode selected by the operation mode selection unit; and
a keypad or at least one graphical button presented on the display along with the virtual mode selection dial for inputting commands for executing a specific function of the selected operation mode.

3. The mobile terminal of claim 1, wherein the display is a light emission display, which includes a liquid crystal display or organic electroluminescent light emission diode.

4. The mobile terminal of claim 1, wherein the display comprises a touchscreen function.

5. The mobile terminal of claim 4, wherein the virtual mode selection dial has a shape of a disc rotating 360°by touching the touchscreen.

6. The mobile terminal of claim 1, wherein the virtual mode selection dial rotates in response to a command input by a key provided on the keypad.

7. The mobile terminal of claim 1, wherein the operation modes include a camera mode, a camcorder mode, a night scene mode, a name card mode, a folder mode, and a setting mode.

8. The mobile terminal of claim 1, wherein the operation modes include a telephone mode, a wireless internet mode, a remote control mode, a game mode, and a calculator mode.

9. A mode selection method for a mobile terminal, comprising:
displaying a virtual mode selection dial on a display;
selecting an operation mode using the virtual mode selection dial; and
executing a specific function associated with the selected operation mode in response to a user command.

10. The mode selection method of claim 9, wherein the user command is input through a specific key provided on a keypad or a specific icon presented on the display.

11. The mode selection method of claim 9, wherein the mobile terminal comprises:
a storage for storing display information on the operation mode selected through the virtual mode selection dial; and
a keypad or at least one graphical button presented on the display along with the virtual mode selection dial for inputting a command for executing a specific function associated with the operation mode.

12. The mode selection method of claim 10, wherein the user command is input by pressing the specific icon or touching the specific icon.

13. The mode selection method of claim 9, wherein the display screen supports a touch screen function.

14. The mode selection method of claim 9, wherein the virtual mode selection dial has a shape of a disc rotating 360°by touching the touch screen.

15. The mode selection method of claim 9, wherein the virtual mode selection dial has a shaper of a disc rotating 360°in response to a command input by a key provided on the keypad.

16. The mode selection method of claim 9, wherein the operation modes include a camera mode, a camcorder mode, a night scene mode, a name card mode, a folder mode, and a setting mode.

17. The mode selection method of claim 9, wherein the operation modes include a telephone mode, a wireless internet mode, a remote control mode, a game mode, and a calculator mode.

18. The mode selection method of claim 9, further comprising displaying an operation status of the selected operation mode.

19. The mode selection method of claim 18, wherein the displaying is provided using a liquid crystal display.
